Europäisches Patentamt

European Patent Office

Office européen des brevets

(19)

(11) Veröffentlichungsnummer : **0 423 138 B1**

(12) **EUROPÄISCHE PATENTSCHRIFT**

(45) Veröffentlichungstag der Patentschrift :
19.08.92 Patentblatt 92/34

(51) Int. Cl.$^5$ : **G11B 5/31**

(21) Anmeldenummer : **89905114.8**

(22) Anmeldetag : **21.04.89**

(86) Internationale Anmeldenummer :
**PCT/EP89/00440**

(87) Internationale Veröffentlichungsnummer :
**WO 90/00794 25.01.90 Gazette 90/03**

(54) DÜNNFILM-MAGNETKOPF MIT MAGNETSCHENKELN AUS JEWEILS MEHREREN MAGNETISCHEN EINZELSCHICHTEN.

(30) Priorität : **14.07.88 DE 3823936**

(43) Veröffentlichungstag der Anmeldung :
**24.04.91 Patentblatt 91/17**

(45) Bekanntmachung des Hinweises auf die
Patenterteilung :
**19.08.92 Patentblatt 92/34**

(84) Benannte Vertragsstaaten :
**DE**

(56) Entgegenhaltungen :
**DE-A- 1 464 619**
**GB-A- 0 888 762**
**US-A- 4 060 798**
**US-A- 4 103 315**
**PATENT ABSTRACTS OF JAPAN, vol. 11, no.
243 (P-603)(2690), 8 August 1987 ; & JP-
A-62052710 (NEC CORP) 07 March 1987, seehe whole document
PATENT ABSTRACTS OF JAPAN, vol. 9, no.
304 (P-409)(2027), 30 November 1985 ; & JP-
A-60136007 (FUJITSU KK) 19 July 1985, see the
whole document
PATENT ABSTRACTS OF JAPAN, vol. 10, no.
361 (P-523)(2418), 4 December 1986 ; & JP-
A-61158017 (NEC CORP) 17 July 1986, see the
whole document
PATENT ABSTRACTS OF JAPAN, vol. 7, no. 57
(P-181)(1202), 9 March 1983 ; & JP-A-57203219
(DENSHI KEISANKI KIHON GIJUTSUKEN-
KIYUU KUMIAI) 13 December 1982, see the
whole document**

(56) Entgegenhaltungen :
**PATENT ABSTRACTS OF JAPAN, vol. 6, no. 55
(E-101)(933), 10 April 1982, & JP-A-56169309
(CANON KK) 26 December 1981, see the whole
document
IBM TECHNICAL DISCLOSURE BULLETIN,
vol. 29, no. 11, April 1987, ARMONK, N.Y. (US),
page 4908, "STABILIZING DOMAIN NET-
WORKS IN THIN FILM HEADS"
PATENT ABSTRACTS OF JAPAN, vol. 9, no.
170 (P-373)(1893), 16 July 1985, & JP-
A-60045919 (FUJITSU KK) 12 March 1985, seehe whole document**

(73) Patentinhaber : **SIEMENS
AKTIENGESELLSCHAFT
Wittelsbacherplatz 2
W-8000 München 2 (DE)**

(72) Erfinder : **SCHEWE, Herbert
Haydnstr. 58
W-8522 Herzogenaurach (DE)**
Erfinder : **STEPHANI, Dietrich
Hans-Birkmayr-Str. 5
W-8526 Bubenreuth (DE)**

## Beschreibung

Dünnfilm-Magnetkopf mit Magnetschenkeln aus jeweils mehreren magnetischen Einzelschichten

Die Erfindung bezieht sich auf einen Dünnfilm-Magnetkopf mit schichtweisem Aufbau, der über einem plattenförmigen Aufzeichnungsmedium zu führen ist und mindestens zwei den magnetischen Fluß führende Magnetschenkel enthält, wobei wenigstens einer der Magnetschenkel mit einer Schichtanordnung aus zwei magnetischen Einzel-Schichten und einer dazwischenliegenden dünnen Isolier Schicht aufgebaut ist und beide Magnet-Schenkel

– mit dem Aufzeichnungsmedium zugewandten Polspitzen eng benachbarte Magnetpole ausbilden,

– eine uniaxiale magnetische Anisotropie aufweisen, wobei die magnetische Vorzugsachse (leichte Achse) im wesentlichen senkrecht zur Führungsrichtung des magnetischen Flusses orientiert ist, und

– außerhalb des Bereichs der Polspitzen einen erweiternden Zwischenraum begrenzen, durch welchen sich zumindest eine Schreib-/Lesespulenwicklung erstreckt.

Ein entsprechender Magnetkopf geht z.b. aus der EP-A-0 150 368 oder JP-A-6252710 hervor.

Das Prinzip einer longitudinalen (horizontalen) oder senkrechten (vertikalen) Magnetisierung zur Speicherung von Daten in entsprechenden, insbesondere plattenförmigen Aufzeichnungsmedien ist allgemein bekannt. Für diese Magnetisierungsarten zu verwendende Dünnfilm-Magnetköpfe weisen zur Führung des magnetischen Flusses im allgemeinen einen Leitkörper aus magnetisierbarem Material auf, der z.B. mit zwei Magnetschenkeln eine Gestalt ähnlich einer Ringform haben kann. Jeder dieser Magnetschenkel mit etwa herzförmähnlicher Gestalt kann lamelliert aufgebaut sein; d.h., er besteht dann aus mehreren magnetischen Einzelschichten, die gegenseitig jeweils durch eine dünne Isolationsschicht getrennt sind. Als Material für die Einzelschichten werden insbesondere spezielle NiFe-Legierungen wie z.B. "Permalloy" vorgesehen, während die Isolationsschichten beispielsweise aus $SiO_2$ bestehen. Die Einzelschichten können dabei so präpariert sein, daß sie eine uniaxiale magnetische Anisotropie aufweisen, wobei die magnetische Vorzugsachse, die sogenannte leichte Achse der Magnetisierung, im wesentlichen senkrecht zur Führungsrichtung des magnetischen Flusses gerichtet ist. Die Magnetschenkel eines solchen Kopfes bilden an ihren dem Aufzeichnungsmedium zugewandten Polspitzen Magnetpole aus, die in relativer Bewegungsrichtung des Kopfes bezüglich des Aufzeichnungsmediums gesehen hintereinender angeordnet sind, wobei zwischen den Polspitzen ein enger Spalt ausgebildet ist. Außerhalb des Bereichs der Polspitzen begrenzen die Magnetschenkel einen Zwischenraum, der aufgrund einer Vergrößerung des gegenseitigen Abstandes der Magnetschenkel entsprechend erweitert ist. Durch diesen Zwischenraum erstecken sich die Leiter mindestens einer Schreib-/Lesespulenwicklung. Einen entsprechenden Aufbau zeigt auch der aus der eingangs genannten EP-A bekannte Magnetkopf. Dieser Magnetkopf soll dabei auf der Rückseite eines nicht-magnetischen Substrates in Dünnfilm-Technik aufgebaut sein, welches als Flugkörper gestaltet ist, der aerodynamisch über dem plattenförmigen Aufzeichnungsmedium hinwegzuführen ist (vgl. auch z.B. EP-A-0 137 051).

Neben diesen zweischenkligen Ausführungsformen von Dünnfilm-Magnetköpfen sind auch dreischenklige Versionen insbesondere für das vertikale Magnetisierungsprinzip bekannt (vgl.z.B. EP-A-0 166 890).

Betrachtet man von derartigen zwei- oder dreischenkligen Dünnfilm-Magnetköpfen eine Einfachschicht eines Magnetschenkels aus einer weichmagnetischen NiFe-Legierung, so treten Bereiche gleicher Magnetisierungsrichtung, sogenannte Domänen, auf. Durch das Zerfallen in Domänen wird erreicht, daß sich der magnetische Fluß innerhalb der Schicht schließt und so der magnetische Energieinhalt ein Minimum annehmen kann (vgl. z.B. EP-A-0 013 883, insbesondere Figur 3). Die Ummagnetisierung erfolgt dann einerseits durch Verschieben von Domänenwänden, andererseits durch Drehprozesse. Das Verschieben von Domänenwänden geht dabei so vonstatten, daß diejenigen Domänen, welche annähernd in ihrer Magnetisierungsrichtung mit der Richtung des angelegten äußeren Feldes übereinstimmen, sich auf Kosten ihrer Nachbarn vergrößern. bei den Drehprozessen richtet sich die Magnetisierungsrichtung einer Domäne in Richtung des angelegten äußeren Feldes aus. Die so zu beobachtende Domänenstruktur hängt insbesondere von geometriebedingten magnetischen Streufeldern, von der uniaxialen Anisotropie und der Magnetostriktion ab. Ein Problem von Magnetköpfen mit einer derartigen Domänenstruktur sind jedoch instabile Domänenanordnungen, die durch die Wandverschiebungen unerwünschte Fluktuationen im Lesesignal erzeugen und damit zu einer Erhöhung der Fehlerrate führen können. Diese Problematik ist in der Veröffentlichung "IBM Technical Disclosure Bulletin", Vol. 29, No. 11, April 1987, Seite 4908 angesprochen. Zur Lösung wird in dieser Veröffentlichung eine Fixierung der netzwerkartigen Domänenstruktur beispielsweise durch Ausbildung von besonderen Vertiefungen oder Erhebungen in der betreffenden Magnetschicht angeregt. Diese besonderen Vertiefungen oder Erhebungen sollen dabei so angeordnet werden, daß sie die einmal ausgebildeten Domänenwände der netzwerkartigen Struktur stabilisieren. Statt der Vertiefungen oder Erhebungen sind auch entsprechende Spuren in der Magnetschicht vorgeschlagen, die sich mit Hilfe eines Laser erzeugen lassen.

Es zeigt sich jedoch, daß bei den bekannten Dünnfilm-Magnetköpfen mit der in Figur 3 der genannten EP-A-0 013 883 dargestellten Domänenstruktur, bei denen die Magnetisierungsrichtungen in den sogenannten Abschlußdomänen am Rande einer Einzelschicht parallel zur Führungsrichtung des magnetischen Flusses verläuft, die Leseempfindlichkeit deutlich vermindert ist. Dies ist insbesondere darauf zurückzuführen, daß in dem Bereich der Polspitzen der Einfluß der unerwünschten Abschlußdomänen überwiegen kann.

Aufgabe der vorliegenden Erfindung ist es deshalb, den Magnetkopf mit den eingangs genannten Merkmalen dahingehend auszugestalten, daß dieser Einfluß von Abschlußdomänen mit Hilfe von verhältnismäßig einfach durchzuführenden Maßnahmen zumindest weitgehend zu unterdrücken ist.

Hierzu ist erfindungsgemäß vorgesehen, daß der wenigsten eine der Magnetschenkel eine Schichtanordnung aus mindestens zwei über ihren ganzen Bereich durch die Isolierschicht getrennten magnetischen Einzelschichten enthält, wobei wenigstens eine Einzelschicht der Schichtanordnung mit schmalen Zonen lokaler mechanischer Spannungen versehen ist, welche Zonen

   – zumindest annähernd parallel zur magnetischen Vorzugsachse der uniaxialen Anisotropie ausgerichtet sind und

   – untereinander jeweils einen Abstand von höchstens 50 μm haben.

Die mit dieser Ausgestaltung des Magnetkopfes verbundenen Vorteile sind insbesondere darin zu sehen, daß unerwünschte Abschlußdomänen durch Verwendung einer Schichtanordnung aus magnetischen Doppel- oder Mehrfach-Schichten verhindert werden können. In diesem Falle wäre der energetisch günstigste Zustand theoretisch dadurch gegeben, daß innerhalb einer solchen Schichtanordnung jede der benachbarten Einzelschichten eine einzige (Ein-)Domäne bildet, deren Magnetisierungsrichtungen untereinander antiparallel ausgerichtet sind. Es zeigt sich aber, daß beim Umschalten vom Schreiben zum Lesen auch in derartigen Schichtanordnungen Domänen auftreten, die instabil sind und beim Zerfall einen Zusatzpuls in der Lesespule erzeugen können. Deshalb ist erfindungsgemäß ferner vorgesehen, daß die Domänenwände in an sich bekannter Weise durch sogenannte Pinning-Zentren fixiert werden. Diese Pinning-Zentren bestehen aus Störzonen mechanischer Spannungen in den Schichten, die parallel zur leichten Achse der uniaxialen Anisotropie ausgebildet sind und somit zu einer streifenartigen Unterteilung der Schichten führen. Damit ergibt sich innerhalb einer Schichtanordnung zunächst für eine Einzelschicht eine Domänenstruktur, deren Domänen an den Rändern dieser streifenartigen Unterteilung fixiert sind und die sich somit in einem stabilen Energieminimum befindet. Im Gegensatz zu der bekannten Einfachschicht treten hierbei keine unerwünschten Abschlußdomänen auf. In der dazu benachbarten Einzelschicht (z.B. bei einer Doppelschichtanordnung) bzw. in den dazu benachbarten Einzelschichten (z.B. bei einer Dreifach-Schichtanordnung) ergibt sich nämlich dann zwangsläufig eine entsprechende Domänenstruktur, deren Domänen dann genau antiparallele Magnetisierungsrichtungen aufweisen und somit zu einem Schluß des magnetischen Flusses mit minimalem magnetischen Energieinhalt führen. Wegen der auf diese Weise zu unterdrückenden Ausbildung von Abschlußdomänen läßt sich vorteilhaft eine entsprechende Beeinträchtigung der Leseempfindlichkeit ausschließen.

Vorteilhafte Ausgestaltungen des erfindungsgemäßen Dünnfilm-Magnetkopfes gehen aus den abhängigen Ansprüchen hervor.

Zur weiteren Erläuterung der Erfindung wird nachfolgend auf die Zeichnung bezug genommen, in deren Figur 1 ein erfindüngsgemäßer Magnetkopf schematisch veranschaulicht ist. Die Figuren 2 und 3 zeigen in verschiedener Ansicht schematisch einen Magnetschenkel für einen solchen Magnetkopf. In den Figuren 4 bis 8 sind spezielle Ausgestaltungsmöglichkeiten eines Magnetschenkels schematisch angedeutet. In den Figuren sind übereinstimmende Teile mit den gleichen bezugszeichen versehen.

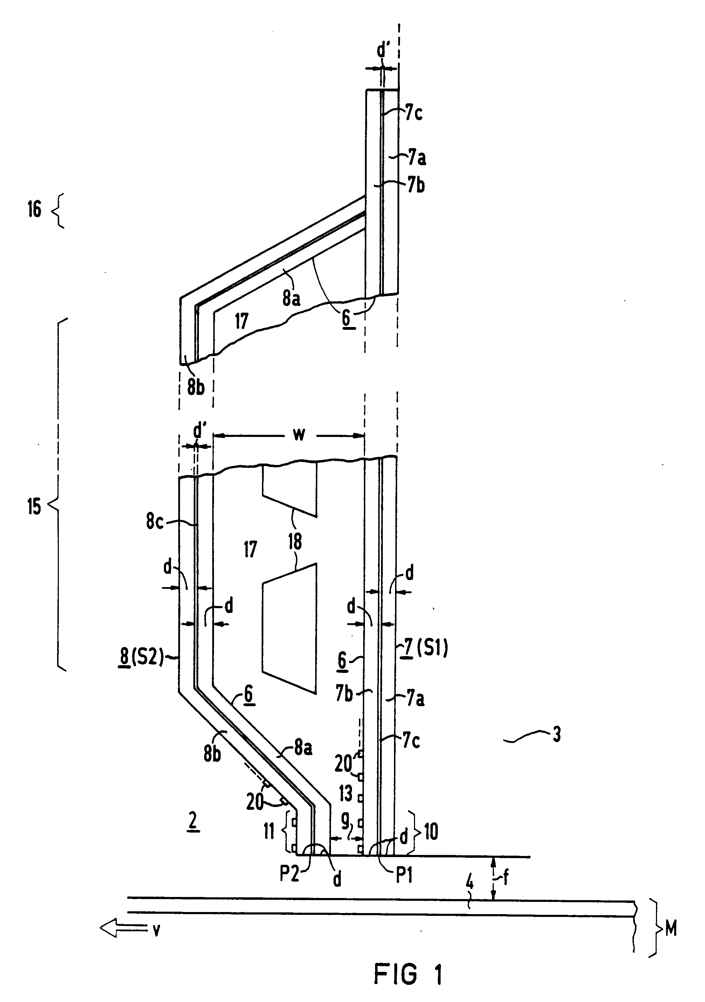

Bei dem in Figur 1 als Längsschnitt nur teilweise veranschaulichten Dünnfilm-Magnetkopf zum Schreiben und Lesen wird von an sich bekannten ringkopfähnlichen Ausführungsformen mit schichtweisem Aufbau für das Prinzip einer senkrechten (vertikalen) oder longitudinalen (horizontalen) Magnetisierung ausgegangen. Der in der Figur allgemein mit 2 bezeichnete Kopf ist in bekannter Dünnfilm-Technik auf der Flachseite eines Substrates 3 abgeschieden. Diese Flachseite bildet dabei insbesondere die Rückseite einer Kufe eines gebräuchlichen, als Flugkörper bezeichneten Elementes, welches in der Figur nicht weiter ausgeführt ist. Dieses Element und damit der Magnetkopf 2 sind somit relativ zu einem an sich bekannten Aufzeichnungsmedium M in geringer Flughöhe f von beispielsweise weniger als 0,2 μm längs einer Spur aerodynamisch zu führen. Die bezüglich des Kopfes relative bewegungsrichtung des sich beispielsweise unter diesem hinwegdrehenden Aufzeichnungsmediums ist durch eine mi v bezeichnete gepfeilte Linie angedeutet. Das Aufzeichnungsmedium M, insbesondere eine Magnetspeicherplatte, weist eine Speicherschicht 4 auf, die entsprechend dem vorgesehenen Magnetisierungsprinzip mit dem Kopf zu beschreiben und auszulesen ist.

Der Magnetkopf 2 enthält einen den magnetischen Fluß führenden, ringkopfähnlichen Leitkörper 6 mit zwei Magnetschenkeln 7 und 8. Diese Magnetschenkel sind weitgehend und insbesondere im Bereich ihrer dem Aufzeichnungsmedium M zugewandten Polspitzen 10 und 11 zumindest annähernd senkrecht zur Oberfläche des Aufzeichnungsmedium ausgerichtet und bilden dort jeweils einen Magnetpol P1 bzw. P2. Unter den Polspitzen sei dabei jeweils das Ende eines Magnetschenkels verstanden, das zumindest weitgehend einheitliche Querausdehnung bzw. Dicke aufweist und zu der jeweils anderen Polspitze annähernd parallel verläuft. Zwischen den beiden Polen P1 und P2 ist ein Luftspalt 13 von einer vorteilhaft geringen longitudinalen, d.h. in bewegungsrichtung v weisenden Weite g von unter 1 $\mu$m, insbesondere unter 0,3 $\mu$m, ausgebildet. In einem mittleren Bereich 15 des ringkopfähnlichen Leitkörpers 6 ist der Abstand zwischen den beiden Magnetschenkeln 7 und 8 gegenüber dieser Spaltweite g erweitert, indem z.B. der hinsichtlich der Bewegungsrichtung v rückwärtige Magnetschenkel 8 in diesem Bereich auf einen größeren Abstand w bezüglich des vorderen, eben ausgebildeten und dem Substrat 3 zugewandten Magnetschenkels 7 führt. Außerhalb dieses Leitkörperbereiches 15 ist auf der dem Aufzeichnungsmedium M abgewandten Seite des Leitkörpers 6 der Magnetschenkel 8 in bekannter Weise in einem Verbindungsbereich 16 an den Magnetschenkel 7 angefügt, so daß sich dann die ringkopfähnliche Gestalt des Leitkörpers 6 ergibt. Durch den zwischen den beiden Magnetschenkeln 7 und 8 in dem mittleren Leitkörperbereich 15 somit vorhandenen Zwischenraum 17 erstreckt sich mindestens eine flache Spulenwicklung 18, mit der gemäß dem dargestellten Ausführungsbeispiel sowohl die Schreib- als auch die Lesefunktion auszuüben ist. Gegebenenfalls sind hierfür auch getrennte Wicklungen vorzusehen. Die in der Figur nur angedeutete Spulenwicklung 18 soll wie der gesamte Magnetkopf in Dünnfilm-Technik erstellt werden.

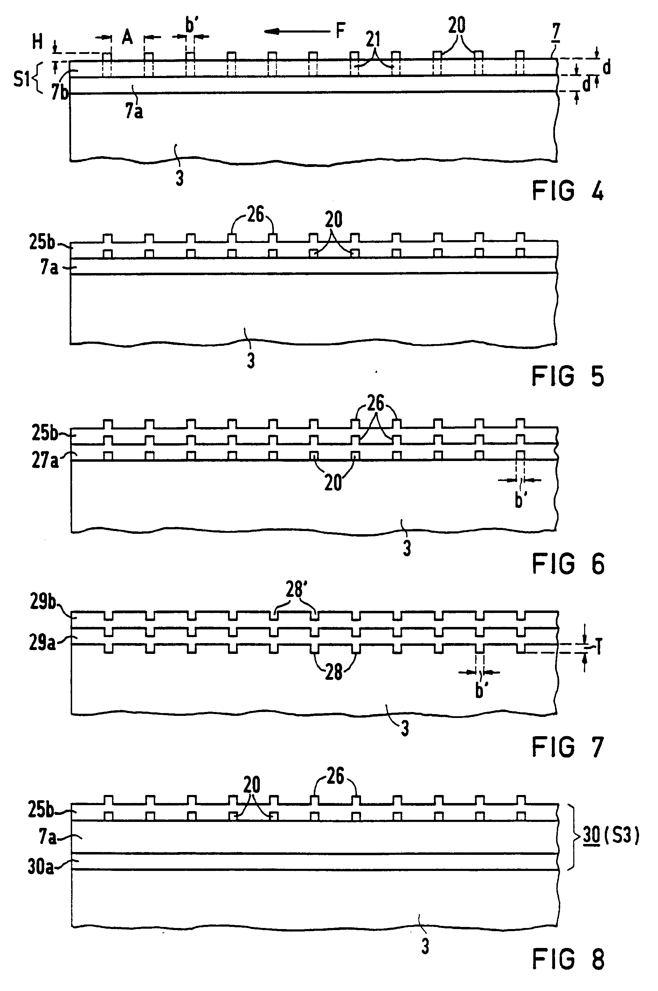

Für die beiden Magnetschenkel 7 und 8 ist gemäß der Erfindung jeweils eine Schichtanordnung S1 bzw. S2 vorzusehen, die jeweils aus zwei oder mehr magnetischen Einzelschichten bestehen soll. Gemäß dem in Figur 1 dargestellten Ausführungsbeispiel sei eine Doppelschicht-Anordnung aus Einzelschichten 7a, 7b bzw. 8a, 8b angenommen. Diese Einzelschichten, die aus einem weichmagnetichen Material wie z.B. einer speziellen NiFe-Legierung hergestellt sind, sollen eine ausgeprägte uniaxiale magnetische Anisotropie aufweisen, wobei die magnetische Vorzugsrichtung der Magnetisierung, die sogenannte leichte Achse, zumindest weitgehend senkrecht zur Führungsrichtung des magnetischen Flusses in dem jeweiligen Magnetschenkel orientiert sein soll. Zwischen benachbarten Einzelschichten, die vorteilhaft eine Schichtdicke d unter 3 $\mu$m, vorzugsweise unter 1 $\mu$m haben, soll sich jeweils eine dünne Isolationsschicht mit einer Schichtdicke d' befinden, die vorteilhaft zwischen 5 nm und 100 nm, vorzugsweise zwischen 15 nm und 230 nm liegt. Diese z.B. aus $SiO_2$ bestehenden Isolationsschichten sind in der Figur mit 7c bzw. 8c bezeichnet und nur durch eine verstärkte Linie veranschaulicht. Wie ferner in der Figur nur in der Nähe der Polspitzen angedeutet ist, sind die jeweils äußeren Einzelschichten 7b bzw. 8b der Magnetschenkel 7 und 8 auf ihren Außenseite noch mit stegartigen Elementen 20 versehen. Mit diesen Elementen sind lokale mechanische Spannungen in der jeweils darunterliegenden Einzelschicht zu erzeugen. Entsprechende Elemente gehen insbesondere aus der Figur 4 näher hervor.

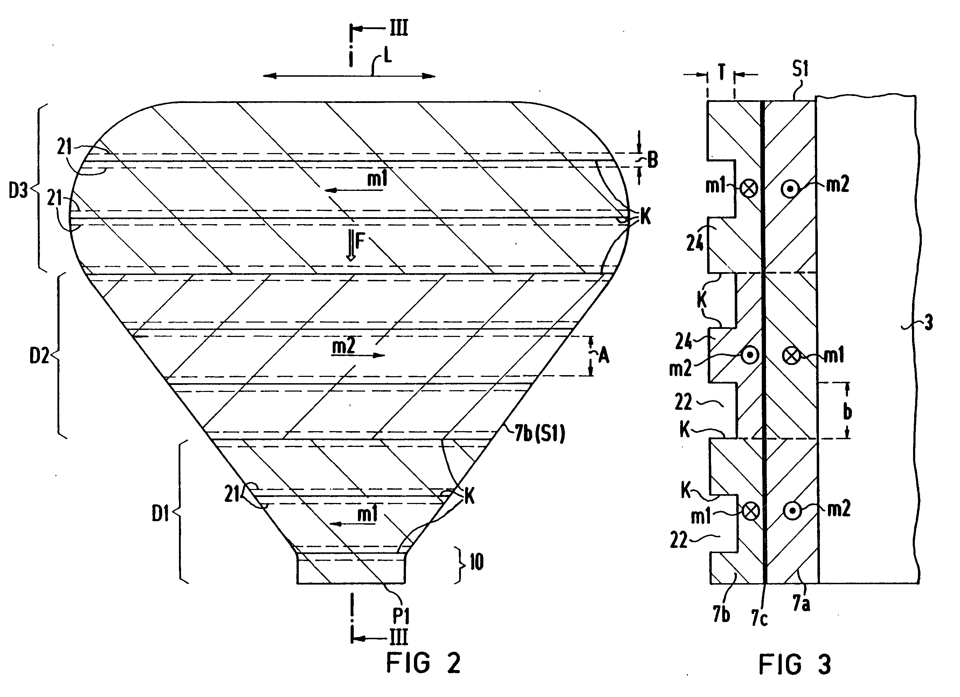

In den Figuren 2 und 3 sind eine Aufsicht auf einen Magnetschenkel 7 mit einer Schichtanordnung S1 bzw. ein entsprechender Querschnitt durch diesen Schenkel schematisch dargestellt. Der Magnetschenkel hat in bekannter Weise eine etwa herzformähnliche Gestalt. Zumindest in seiner äußeren Einzelschicht 7b ist erfindungsgemäß eine Schar von untereinander parallelen schmalen Zonen 21 ausgebildet, die sogenannte Pinning-Zentren darstellen (vgl. die genannte Veröffentlichung "IBM Techn. Discl.Bull."), in welchen lokale mechanische Spannungen hervorgerufen sind. Diese somit als Pinning-Zonen zu bezeichnenden Zonen 21 verlaufen bei der gewählten Anisotropie zumindest annähernd parallel zur Richtung L der sogenannten leichten Achse der Magnetisierung, die senkrecht zur Führungsrichtung F des magnetischen Flusses in dem Magnetschenkel orientiert ist.

Diese Pinning-Zonen 21 können gemäß dem dargestellten Ausführungsbeispiel dadurch erzeugt werden, daß man die Oberfläche der Einzelschicht 7b zu einem streifenartigen Muster strukturiert. Wie insbesondere aus Figur 3 deutlich hervorgeht, sind hierzu in die Oberfläche streifenartige Vertiefungen 22 eingearbeitet, beispielsweise eingeätzt. Diese Vertiefungen haben eine in Flußführungsrichtung F zu messende Breite b, die zwischen etwa 5 $\mu$m und 50 $\mu$m liegen kann und beispielsweise 25 $\mu$m beträgt. Die zwischen diesen Vertiefungen 22 verbleibenden stegartigen Erhöhungen 24 können z.B. die gleiche Breite wie die Vertiefungen haben. Die Tiefe T der Vertiefungen 22 sollte dabei mindestens 100 nm betragen. An den Kanten K der Vertiefungen bilden sich dann die gewünschten Zonen 21 lokaler mechanischer Spannungen aus. Diese Zonen sind in Figur 2 durch gestrichelte Linien angedeutet. Ihre in Flußführungsrichtung F zu messende Breite B liegt im allgemeinen deutlich unter 100 nm; denn die Pinning-Zentren-Breite ist nicht größer als die Dicke einer entsprechenden magnetischen Wand (in der Größenordnung von einigen 10 nm). Gemäß dem dargestellten Ausführungsbeispiel sind die schmalen Pinning-Zonen 21 untereinander etwa gleich weit beabstandet, wobei ein jeweiliger Abstand A von höchstens 50 $\mu$m gewählt wird. Gegebenenfalls ist es jedoch auch möglich, insbesondere im Bereich der Polspitzen 10 und 11, einen geringeren Zonenabstand A als außerhalb dieses Bereiches vorzusehen.

In einer derart strukturierten Einzelschicht bilden sich dann bei einem Magnetisierungsvorgang einzelne Domänen aus, deren Domänenwände durch einige dieser schmalen Pinning-Zonen 21 fixiert werden. Eine so entstandene, stabile Domänenstruktur ist in den Figuren 2 und 3 angedeutet, wobei angenommen ist, daß sich in der Einzelschicht 7b drei Domänen D1 bis D3 ausgebildet haben. Es ist jedoch ebensogut denkbar, daß auch eine andere Anzahl, beispielsweise zwei oder vier Domänen entstehen. Benachbarte Domänen unterscheiden sich dabei durch verschiedene Magnetisierungsrichtungen m1 und m2. Diese Eigenschaft ist in den Figuren 2 und 3 außerdem durch verschiedene Schraffur verdeutlicht.

Ist erst einmal in der äußeren Einzelschicht 7b des Magnetschenkels 7 eine Domänenstruktur aufgrund der Pinning-Zonen 21 erzwungen, so ergibt sich von selbst in der darunterliegenden Einzelschicht 7a der Schichtanordnung S1 eine entsprechende Domänenstruktur. Dort haben jedoch die Domänen genau antiparallele Magnetisierungsrichtungen im Vergleich zu den jeweils darüberliegenden Domänen in der Einzelschicht 7b (vgl. Figur 3). Auf diese Weise kann sich der magnetische Fluß in den jeweils übereinanderliegenden streifenartigen Domänenbereichen schließen und kann so der magnetische Energieinhalt ein Minimum annehmen.

In den Figuren 4 bis 8 sind schematisch Ausbildungsmöglichkeiten von Elementen jeweils als Längsschnitt veranschaulicht, mit denen in mindestens einer, Einzelschicht einer Mehrschichtanordnung nach der Erfindung Zonen 21 lokaler mechanischer Spannungen erzeugt werden können, die dann als Pinning-Zentren bzw. als Domänenwände wirken. Dabei ist für die Darstellung jeweils ein Ausschnitt aus dem Magnetschenkel eines erfindungsgemäßen Magnetkopfes gewählt, welcher einem Substrat zugewandt ist. Der weitere Magnetschenkel dieses Kopfes kann dann entsprechend ausgestaltet werden.

Gemäß Figur 4 ist ein Magnetschenkel, bei dem es sich beispielsweise um den in Figur 1 dargestellten Schenkel 7 handeln kann, mit seiner Schichtanordnung S1 auf einem Substrat 3 oder auf einer auf diesem Substrat abgeschiedenen Deck- oder Einebnungsschicht angeordnet. Auf die äußere Einzelschicht 7b dieses Magnetschenkels 7 werden dann an den Stellen der auszubildenden Pinning-Zonen 21 besondere, schmale stegartige Elemente 20 aufgebracht. Vorteilhaft bestehen diese Elemente 20 aus einem Material, dessen Dehnungskoeffizient deutlich verschieden von dem des Materials der Einzelschichten 7a und 7b ist. Wird nämlich ein derartiges Element 20 aus einem solchen Material unter Wärmeeinwirkung auf der Einzelschicht 7b ausgebildet, so werden dann in dieser Einzelschicht bei der sich anschließenden Abkühlung an der betreffenden Stelle aufgrund des unterschiedlichen Schrumpfungsverhaltens der beteiligten Materialien bleibende mechanische Spannungen hervorgerufen. Die so ausgebildeten Zonen 21, die unter intrinsischen mechanischen Spannungen stehen, stellen dann die als Domänenwände wirkenden Pinning-Zentren dar. Für Einzelschichten 7a und 7b aus einer NiFe-Legierung können insbesondere stegartige Elemente 20 aus Cr, SiN oder $Si_3N_4$ vorgesehen werden. Die in Flußführungsrichtung F zu messende Breite der stegartigen Elemente legt dabei fest, ob an jedem Rand eines Elementes die Ausbildung einer Pinning-Zone (entsprechend Fig. 2 und 3) verursacht wird. Wählt man jedoch eine Breite b′ von höchstens 2 μm, so wird mit jedem Element nur eine einzige Pinning-Zone 21 hervorgerufen. Die Höhe H der Elemente-ist jedoch weniger kritisch; sie sollte aber nicht kleiner als 100 nm sein. Die von den Elementen 20 in der Einzelschicht 7b erzeugten Pinning-Zonen 21 sind in der Figur stark vereinfacht durch gestrichelte Linien angedeutet. Ist dabei die Breite b′ hinreichend klein gewählt,Die zwischen den beiden Einzelschichten 7a und 7b ausgebildete Isolationsschicht ist in der Figur nicht ausgeführt.

Die in Figur 5 gezeigte Ausführungsform eines Magnetschenkels unterscheidet sich von der des Magnetschenkels 7 nach Figur 4 lediglich dadurch, daß die stegartigen Elemente 20 nicht auf einer äußeren Einzelschicht 25b, sondern auf der dem Substrat 3 zugewandten Einzelschicht 7a aufgebracht sind. Die äußere Einzelschicht 25b erhält dann bei dem Herstellungsprozeß in Dünnschicht-Technik im Bereich der stegartigen Elemente 20 entsprechende Erhebungen 26.

Gemäß Figur 6 können die stegartigen Elemente 20 auch direkt auf das Substrat 3 aufgebracht werden, so daß dann die beiden Einzelschichten 27a und 25b entsprechende Erhebungen 26 aufweisen.

Die mit den stegartigen Elementen 20 gemäß den Figuren 1 und 4 bis 6 hervorzurufenden Pinning-Zonen 21 starker intrinsischer mechanischer Spannungen in den jeweiligen Einzelschichten können, wie bereits in den Figuren 2 und 3 angedeutet, auch durch entsprechende Vertiefungen erzeugt werden. Gemäß dem in Figur 7 dargestellten Ausführungsbeispiel eines Magnetschenkels sind in das Substrat 3 an den vorbestimmten Stellen rinnenartige Aussparungen 28 eingearbeitet, deren Abmessungen (Breite b′, Tiefe T) jedoch denen der stegartigen Elemente 20 entsprechen. Diese Aussparungen führen dann beim Abscheidungsprozeß der Einzelschichten 29a und 29b zu entsprechenden Vertiefungen 28′ in diesen Schichten.

Gemäß den in den Figuren 1 und 4 bis 7 dargestellten Ausführungsbeispielen von erfindungsgemäßen Magnetköpfen wurde davon ausgegangen, daß jede Schichtanordnung sich aus zwei parallelen Einzelschichten zusammensetzt. Die angestrebte Unterdrückung einer Ausbildung von Abschlußdomänen kann aber auch mit einer Schichtanordnung aus mehr als zwei Einzelschichten erreicht werden. Eine entsprechende Ausbildungsmöglichkeit ist in Figur 8 angedeutet. Der dort gezeigte Magnetschenkel 30 unterscheidet sich von dem Magnetschenkel nach Figur 5 hinsichtlich seiner Schichtanordnung S3 lediglich dadurch, daß eine weitere Einzelschicht 30a unterhalb der Einzelschicht 7a angeordnet ist. Dabei ist die somit mittlere, vergleichsweise dickere Schicht

7a mit den Maßnahmen zur Ausbildung der Schichtzonen 21 starker intrinsischer mechanischer Spannungen versehen. Die in der Einzelschicht 7a entstehenden Domänen sind dann mit Hilfe entsprechender Domänen, jedoch entgegengesetzter Magnetisierungsrichtung in den Einzelschichten 7a und 25b hinsichtlich des magnetischen Flusses energetisch am günstigsten zu schließen. Gegebenenfalls können hierzu die äußerste und innerste Einzelschicht 25b bzw. 30a eine geringere Dicke als die mittlere Einzelschicht 7a haben.

Eine weitere Möglichkeit zur Ausbildung von schmalen Zonen 21 starker mechanischer Spannungen in den.Einzelschichten besteht darin, daß mit Hilfe des Brennfleckes einer energiereichen Strahlung wie z.B. von einem Laser an den betreffenden Stellen eine Spur gezogen wird. Das z.B. in Figur 7 dargestellte Zonenmuster kann auf diese Weise besonders einfach erzeugt werden.

Ferner wurde bei den Ausführungsbeispielen angenommen, daß sich die erfindungsgemäßen Maßnahmen auf die beiden Magnetschenkel eines Magnetkopfes beziehen sollen. Gegebenenfalls ist es jedoch auch möglich, nur einen Magnetschenkel ein,es Magnetkopfes erfindungsgemäß auszugestalten, während ein zweiter Magnetschenkel in bekannter Weise aufgebaut bleibt. So ist es z.B. möglich, bei einem Magnetkopf mit verhältnismäßig breitem Hilfspol und demgegenüber schmalem Hauptpol (vgl. z.B. die DE-OS 29 24 013) nur auf den Hauptpolschenkel die erfindungsgemäßen Maßnahmen anzuwenden.

Die erfindungsgemäßen Maßnahmen sind selbstverständlich auch für bekannte Ausführungsformen von Magnetköpfen mit mindestens drei Magnetschenkeln geeignet.

## Patentansprüche

1. Dünnfilm-Magnetkopf mit schichtweisem Aufbau, der über einem plattenförmigen Aufzeichnungsmedium zu führen ist und mindestens zwei den magnetischen Fluß führende Magnetschenkel enthält, wobei wenigstens einer der Magnetschenkel mit einer Schichtanordnung aus zwei magnetischen Einzelschichten und einer dazwischenliegenden dünnen Isolationsschicht aufgebaut ist und beide Magnetschenkel

– mit dem Aufzeichnungsmedium zugewandten Polspitzen eng beabstandete Magnetpole ausbilden,

– eine uniaxiale magnetische Anisotropie aufweisen, wobei die magnetische Vorzugsachse (leichte Achse) im wesentlichen senkrecht zur Führungsrichtung des magnetischen Flusses orientiert ist,

und

– außerhalb des Bereichs der Polspitzen einen erweiterten Zwischenraum begrenzen, durch welchen sich zumindest eine Schreib-/Lesespulenwicklung erstreckt,

**dadurch gekennzeichnet** , daß der wenigstens eine der Magnetschenkel (7, 8, 30) eine Schichtanordnung (S1, S2, S3) aus mindestens zwei über ihren ganzen Bereich durch die Isolationsschicht (7c, 8c) getrennten magnetischen Einzelschichten (7a, 7b, 8a, 8b, 25b, 27a, 29a, 29b, 30a) enthält, wobei wenigstens eine Einzelschicht der Schichtanordnung mit schmalen Zonen (21) lokaler mechanischer Spannungen versehen ist, welche Zonen (21)

– zumindest annähernd parallel zur Richtung (L) der magnetischen Vorzugsachse der uniaxialen Anisotropie ausgerichtet sind

und

– untereinander jeweils einen Abstand (A) von höchstens 50 μm haben.

2. Magnetkopf nach Anspruch 1, **dadurch gekennzeichnet**, daß die Zonen (21) lokaler mechanischer Spannungen eine in Führungsrichtung (F) des magnetischen Flusses zu messende Breite (B) von höchstens 100 nm aufweisen.

3. Magnetkopf nach Anspruch 1 oder 2, **dadurch gekennzeichnet**, daß die Einzelschichten eine Dicke (d) von höchstens 3 μm haben.

4. Magnetkopf nach einem der Ansprüche 1 bis 3, **dadurch gekennzeichnet**, daß die Einzelschichten aus einer NiFe-Legierung bestehen.

5. Magnetkopf nach einem der Ansprüche 1 bis 4, **dadurch gekennzeichnet** , daß die Einzelschichten einer Schichtanordnung (S1, S2, S3) untereinander jeweils durch eine Isolationsschicht (7c, 8c) mit einer Dicke (d′) zwischen 5 nm und 100 nm, vorzugsweise zwischen 15 nm und 30 nm getrennt sind.

6. Magnetkopf nach einem der Ansprüche 1 bis 5, **dadurch gekennzeichnet**, daß die Zonen (21) lokaler mechanischer Spannungen durch stegartige Elemente (20) mit einer Breite (b′) von höchstens 2 μm hervorgerufen sind, die auf eine der Einzelschichten der Schichtanordnung (S1, S2, S3) aufgebracht sind.

7. Magnetkopf nach Anspruch 6, **dadurch gekennzeichnet**, daß die Höhe (H) der stegartigen Elemente (20) mindestens 100 nm beträgt.

8. Magnetkopf nach Anspruch 6 oder 7, **dadurch gekennzeichnet,** daß die stegartigen Elemente (20) aus einem Material bestehen, dessen thermischer Dehnungskoeffizient von dem des Materials der Einzelschichten verschieden ist.

9. Magnetkopf nach Anspruch 8, **dadurch gekennzeichnet**, daß die stegartigen Elemente (20) aus Cr oder SiN oder $Si_3N_4$ bestehen.

10. Magnetkopf nach einem der Ansprüche 1 bis 5, **dadurch gekennzeichnet**, daß die Zonen (21) lokaler mechanischer Spannungen durch rinnenartige Vertiefungen (22, 28') mit vorbestimmter Breite (b, b') hervorgerufen sind, die in mindestens einer der Einzelschichten (7b; 29a, 29b) der Schichtanordnung (S1, S2, S3) ausgebildet sind.

11. Magnetkopf nach Anspruch 10, **dadurch gekennzeichnet**, daß in dem Substrat (3) oder in einer darauf aufgebrachten nicht-magnetischen Deckschicht rinnenartige Aussparungen (28) entsprechend den rinnenartigen Vertiefungen (28') der Einzelschichten (29a, 29b) ausgebildet sind (vgl. Figur 7).

12. Magnetkopf nach Anspruch 10 oder 11, **dadurch gekennzeichnet**, daß die rinnenartigen Vertiefungen (22) der Einzelschichten (7b) eine Breite (b) zwischen 5 µm und 50 µm haben, so daß an ihren Kanten (K) jeweils zwei Zonen (21) lokaler mechanischer Spannungen ausgebildet sind (vgl. Figuren 2 und 3).

13. Magnetkopf nach Anspruch 10 oder 11, **dadurch gekennzeichnet**, daß die rinnenartigen Vertiefungen (28') der Einzelschichten (29a, 29b) eine Breite (b') von höchstens 2 µm haben, so daß mit ihnen jeweils eine Zone (21) lokaler mechanischer Spännungen ausgebildet ist (vgl. Figur 7).

14. Magnetkopf nach einem der Ansprüche 10 bis 13, **dadurch gekennzeichnet**, daß die Tiefe (T) der rinnenartigen Vertiefungen (22, 28') mindestens 100 nm beträgt.

15. Magnetkopf nach einem der Ansprüche 1 bis 5 oder nach Anspruch 13, **dadurch gekennzeichnet**, daß die Zonen (21) lokaler mechanischer Spannungen als Brennfleckspur eines Lasers in der betreffenden Einzelschicht ausgebildet sind.

16. Magnetkopf nach einem der Ansprüche 1 bis 15, **dadurch gekennzeichnet**, daß der gegenseitige Abstand (A) zwischen benachbarten Zonen (21) lokaler mechanischer Spannungen zumindest weitgehend konstant über den gesamten Magnetschenkel (7, 8, 30) ist.

17. Magnetkopf nach einem der Ansprüche 1 bis 15, **dadurch gekennzeichnet**, daß der gegenseitige Abstand (A) zwischen benachbarten Zonen (21) lokaler mechanischer Spannungen im Bereich der Polspitzen (10, 11) der Magnetschenkel (7, 8, 30) geringer ist als außerhalb dieses Bereiches.

## Claims

1. Thin-film magnetic head having a layer construction, which can be guided over a plate-shaped recording medium and contains at least two magnetic arms guiding the magnetic flux, with at least one of the magnetic arms being constructed with a layer arrangement consisting of two individual magnetic layers and a thin insulating layer located between them, and the two magnetic arms:

– form closely spaced magnetic poles, with pole tips facing the recording medium,

– have a uniaxial magnetic anisotropy, with the preferred magnetic axis (light axis) directed substantially perpendicular to the guide direction of the magnetic flux,
and

– define, outside the region of the pole tips, an expanded gap, through which there extends at least one read/write coil winding,

**characterised in that** at least one magnetic arm (7, 8, 30) contains a layer arrangement (S1, S2, S3) consisting of at least two individual magnetic layers (7a, 7b, 8a, 8b, 25b, 27a, 29a, 29b, 30a) separated over their entire extent by the insulating layer (7c, 8c), with at least one individual layer of the layer arrangement being provided with narrow zones (21) of local mechanical stress, which zones (21):

– are aligned at least approximately parallel to the direction (L) of the preferred magnetic axis of the uniaxial anisotropy,
and

– have between them in each case a distance (A) of 50 µm at most.

2. Magnetic head according to claim 1, **characterised in that** the zones (21) of local mechanical stress have a width (B) of at most 100 nm to be measured in the guide direction (F) of the magnetic flux.

3. Magnetic head according to claim 1 or 2, **characterised in that** the individual layers have a thickness (d) of 3 µm at most.

4. Magnetic head according to one of claims 1 to 3, **characterised in that** the individual layers consist of a NiFe alloy.

5. Magnetic head according to one of claims 1 to 4, **characterised in that** the individual layers of a layer arrangement (S1, S2, S3) are separated from each other by a respective insulating layer (7c, 8c) having a thickness (d') of between 5 nm and 100 nm, preferably between 15 nm and 30 nm.

EP 0 423 138 B1

6. Magnetic head according to one of claims 1 to 5, **characterised in that** the zones (21) of local mechanical stress are created by bridge-type elements (20) having a width (b′) of 2 μm at most, which are attached to one of the individual layers of the layer arrangement (S1, S2, S3).

7. Magnetic head according to claim 6, **characterised in that** the height (H) of the bridge-type elements (20) amounts to at least 100 nm.

8. Magnetic head according to claim 6 or 7, **characterised in that** the bridge-type elements (20) consist of a material, the thermal expansion coefficient of which differs from that of the material of the individual layers.

9. Magnetic head according to claim 8, **characterised in that** the bridge-type elements (20) consist of Cr or SiN or $Si_3N_4$.

10. Magnetic head according to one of claims 1 to 5, **characterised in that** the zones (21) of local mechanical stress are created by channel-shaped indentations (22, 28′) of predetermined width (b, b′) which are formed in at least one of the individual layers (7b; 29a, 29b) of the layer arrangement (S1, S2, S3).

11. Magnetic head according to claim 10, **characterised in that**, in the substrate (3) or in a non-magnetic covering layer applied thereto, there are formed channel-shaped recesses (28) corresponding to the channel-shaped indentations (28′) in the individual layers (29a, 29b) (cf. Figure 7).

12. Magnetic head according to claim 10 or 11, **characterised in that** the channel-shaped indentations (22) in the individual layers (7b) have a width (b) of between 5 μm and 50 μm, so that, on each of their edges (K), there are formed two zones (21) of local mechanical stress (cf. Figures 2 and 3).

13. Magnetic head according to claim 10 or 11, **characterised in that** the channel-shaped indentations (28′) in the individual layers (29a, 29b) have a width (b′) of 2 μm at most, so that, by these indentations (28′), there is formed a respective zone (21) of local mechanical stress (cf. Figure 7).

14. Magnetic head according to one of claims 10 to 13, **characterised in that** the depth (T) of the channel-shaped indentations (22, 28′) amounts to at least 100 nm.

15. Magnetic head according to one of claims 1 to 5 or according to claim 13, **characterised in that** the zones (21) of local mechanical stress are formed in the respective individual layer as a focal spot trace of a laser.

16. Magnetic head according to one of claims 1 to 15, **characterised in that** the mutual spacing (A) between adjacent zones (21) of local mechanical stress is at least substantially constant over the whole of the magnetic arm (7, 8, 30).

17. Magnetic head according to one of claims 1 to 15, **characterised in that** the mutual spacing (A) between adjacent zones (21) of local mechanical stress is less within the region of the pole tips (10, 11) of the magnetic arms (7, 8, 30) than it is outside this region.

## Revendications

1. Tête magnétique en couche mince et à structure stratifiée, qui doit être déplacée au-dessus d'un support d'enregistrement en forme de disque et qui comporte au moins deux branches magnétiques guidant le flux magnétique, au moins l'une des branches magnétiques étant constituée par un agencement en couches comprenant deux couches magnétiques individuelles et une couche isolante mince intercalée, alors que les deux branches magnétiques

– forment, avec des pointes polaires tournées vers le support d'enregistrement, des pôles magnétiques séparés par une très faible distance,

– possèdent une anisotropie magnétique uniaxiale, l'axe magnétique préférentiel (axe facile) étant orienté sensiblement perpendiculairement à la direction de guidage du flux magnétique,

et

– délimitent, en dehors de la zone des pointes polaires, un espace intercalaire élargi, dans lequel s'étend au moins un enroulement de bobines d'enregistrement/lecture,

**caractérisée par** le fait qu'au moins l'une des branches magnétiques (7,8,30) comporte un agencement en couches (S1,S2,S3) formé par au moins deux couches magnétiques individuelles (7a,7b,8a,8b,25b,27a, 29a,29b,30a) séparées sur toute leur étendue par la couche isolante (7c,8c), au moins une couche individuelle de l'agencement en couches comportant des zones étroites (21) de contraintes mécaniques locales, lesquelles zones (21)

– sont orientées approximativement parallèlement à la direction (L) de l'axe magnétique préférentiel de l'anisotropie uniaxiale,

et

– sont séparées respectivement par une distance (A) égale au maximum à 50 μm.

2. Tête magnétique suivant la revendication 1, **caractérisée par** le fait que les zones (21) de contraintes mécaniques locales possèdent une largeur (B), mesurée dans la direction de guidage (F) du flux magnétique, égale au maximum à 100 nm.

3. Tête magnétique suivant la revendication 1 ou 2, **caractérisée par** le fait que les couches individuelles possèdent une épaisseur (d) égale au maximum à 3 μm.

4. Tête magnétique suivant l'une des revendications 1 à 3, **caractérisée par** le fait que les couches individuelles sont constituées par un alliage de NiFe.

5. Tête magnétique suivant l'une des revendications 1 à 4, **caractérisée par** le fait que les couches individuelles d'un agencement en couches (S1,S2,S3) sont séparées les unes des autres respectivement par une couche isolante (7c,8c) possédant une épaisseur (d') comprise entre 5 nm et 100 nm, de préférence entre 15 nm et 30 nm.

6. Tête magnétique suivant l'une des revendications 1 à 5, **caractérisée par** le fait que les zones (21) de contraintes mécaniques locales sont produites par des éléments en forme de barrettes (20) possédant une largeur (b') égale au maximum à 2 μm, et qui sont disposées sur l'une des couches individuelles de l'agencement en couches (S1,S2,S3).

7. Tête magnétique suivant la revendication 6, **caractérisée par** le fait que la hauteur (H) des éléments en forme de barrettes (20) est égale au moins à 100 nm.

8. Tête magnétique suivant la revendication 6 ou 7, **caractérisée par** le fait que les éléments en forme de barrettes (20) sont réalisés en un matériau dont le coefficient de dilatation thermique est différent de celui du matériau des couches individuelles.

9. Tête magnétique suivant la revendication 8, **caractérisée par** le fait que les éléments en forme de barrettes (20) sont constitués par du Cr ou du SiN ou du $Si_3N_4$.

10. Tête magnétique suivant l'une des revendications 1 à 5, **caractérisée par** le fait que les zones (21) de contraintes mécaniques locales sont formées par des renfoncements en forme de rainures (22,28') possédant une largeur prédéterminée (b, b') et qui sont formées dans au moins l'une des couches individuelles (7b; 29a,29b) de l'agencement en couches(S1,S2,S3).

11. Tête magnétique suivant la revendication 10, **caractérisée par** le fait que des évidements (28) en forme de rainures sont ménagés dans le substrat (3) ou dans une couche de revêtement amagnétique disposée sur le substrat, et sont réalisés de manière à correspondre aux renfoncements en forme de rainures (28') des couches individuelles (29a,29b) (voir figure 7).

12. Tête magnétique suivant la revendication 10 ou 11, **caractérisée par** le fait que les renfoncements en forme de rainures (22) des couches individuelles (7b) possèdent une largeur (b) comprise entre 5 μm et 50 μm, de sorte que respectivement deux zones (21) de contraintes mécaniques locales sont formées au niveau de leurs bords (K) (voir figures 2 et 3).

13. Tête magnétique suivant la revendication 10 ou 11, **caractérisée par** le fait que les renfoncements en forme de rainures (28') des couches individuelles (29a,29b) possèdent une largeur (b') égale au maximum à 2 μm, en sorte qu'avec ces rainures on obtient respectivement une zone (21) de contraintes locales mécaniques (voir figure 7).

14. Tête magnétique suivant l'une des revendications 10 à 13, **caractérisée par** le fait que la profondeur (T) des renfoncements en forme de rainures (22,28') est égale au moins à 100 nm.

15. Tête magnétique suivant l'une des revendications 1 à 5 ou suivant la revendication 13, **caractérisée par** le fait que les zones (21) de contraintes mécaniques locales sont réalisées sous la forme d'un spot focal d'un laser dans la couche individuelle considérée.

16. Tête magnétique suivant l'une des revendications 1 à 15, **caractérisée par** le fait que la distance réciproque (A) entre des zones voisines (21) de contraintes mécaniques locales est au moins dans une large mesure constante sur l'ensemble de la branche magnétique (7,8,30).

17. Tête magnétique suivant la revendication 1 à 15, **caractérisée par** le fait que la distance réciproque (A) entre des zones voisines (21) de contraintes mécaniques locales est plus faible dans la zone des pointes polaires (10,11) des branches magnétiques (7,8,30) qu'à l'extérieur de cette zone.

FIG 1

FIG 3

FIG 2

FIG 4

FIG 5

FIG 6

FIG 7

FIG 8